# EUROPEAN PATENT APPLICATION

(11) **EP 2 192 328 A1**
(43) Date of publication of application: **02.06.2010**
(21) Application number: 09712808.6
(22) Date of filing: 04.02.2009
(51) Int. Cl.: F16H 1/28, B64C 27/12, F16H 1/30

(54) **PLANETARY MECHANISM**

(30) Priority: 19.02.2008 JP 2008037848
(71) Applicant: Mitsubishi Heavy Industries, Ltd., Tokyo 108-8215 (JP)
(72) Inventor: NAKAYAMA, Shuichi, Nagoya-shi Aichi 455-8515 (JP); SHIMOYAMA, Kunimitsu, Nagoya-shi Aichi 455-8515 (JP); SUZUKI, Kazutaka, Ritto-shi Shiga 520-3080 (JP); ONO, Yasuhiro, Komaki-shi Aichi 485-8561 (JP); SAKAI, Kenji, Ritto-shi Shiga 520-3080 (JP)
(74) Representative: Bongiovanni, Simone
(86) International application number: PCT/JP2009/051850
(87) International publication number: WO 2009/104473

(57) **Abstract**

A planetary gear system contains: a sun gear as an input; a fixed ring gear; a planetary career as an output; and a planetary gear unit supported by the planetary career.
The planetary gear unit includes : a shaft; a first planetary gear coupled to the shaft and engaging the sun gear; and a second planetary gear coupled to the shaft and engaging the ring gear. The planetary gear unit rotates around a first rotation axis with respect to the planetary career.
The planetary career rotates around a second rotation axis.
The first rotation axis intersects the second rotation axis.

## Description

### Technical Field

The present invention relates to a planetary gear system.

### Background Art

A transmission is known which converts a rotation speed or torque of an output shaft of a motor into a necessary rotation speed or torque. A planetary gear system is often employed as a transmission in a machine tool and transportation means such as a car and a helicopter.

U.S. Patent No.5807202 and U.S. Patent No. 7201699 respectively disclose planetary gear systems with face gears. Those planetary gear systems are applied to helicopters.

In a helicopter, although a rotation speed of a gas turbine engine is several tens of thousands rpm, a rotation speed of a main rotor is several hundreds rpm. As for a planetary gear system for the helicopter, it is especially important to attain a large reduction gear ratio while suppressing the increase in weight.

### Disclosure of Invention

An object of the present invention is to provide a planetary gear system that can attain a large reduction gear ratio while suppressing the increase in weight.

A planetary gear system of the present invention contains: a sun gear as an input; a fixed ring gear; a planetary career as an output; and a planetary gear unit supported by the planetary career. The planetary gear unit includes: a shaft; a first planetary gear coupled to the shaft and engaging the sun gear; and a second planetary gear coupled to the shaft and engaging the ring gear. The planetary gear unit rotates around a first rotation axis with respect to the planetary career. The planetary career rotates around a second rotation axis. The first rotation axis intersects the second rotation axis.

A pitch circle diameter of the second planetary gear is preferred to be smaller than a pitch circle diameter of the first planetary gear.

The shaft is preferred to extend from the first planetary gear in a first direction to be coupled to the second gear. The first direction is a direction of departing from the second rotation axis.

The first rotation axis is preferred to be inclined from a state of intersecting the second rotation axis at right angle in a direction in which an opposite side of the first planetary gear departs from the second rotation axis. The opposite side is opposite to an engaging side of the first planetary gear with respect to the first rotation axis. The engaging side engages the sun gear.

The sun gear and the ring gear are preferred to be face gears.

It is preferred that torque is transmitted to the sun gear from an engine of a helicopter and torque is outputted from the planetary career to a main rotor of the helicopter.

According to the present invention, a planetary gear system that can attain a large reduction gear ratio while suppressing the increase in weight is provided.

### Brief Description of Drawings

The above object, other objects, advantages and features of the present invention will be more apparent from the descriptions of embodiments in conjunction with the attached drawings in which:
Fig. 1 is a top view of a planetary gear system according to a first embodiment of the present invention;
Fig. 2 is a side view of the planetary gear system according to the first embodiment;
Fig. 3A is a top view of a planetary gear system according to a first comparison example;
Fig. 3B is a side view of the planetary gear system according to the first comparison example;
Fig. 4A is a top view of a planetary gear system according to a second comparison example;
Fig. 4B is a side view of the planetary gear system according to the second comparison example;
Fig. 5 shows a side view of a planetary gear system according to a second embodiment of the present invention;
Fig. 6 shows a side view of a planetary gear system according to a third embodiment of the present invention;
Fig. 7 shows a side view of a planetary gear system according to a fourth embodiment of the present invention;
Fig. 8 shows a side view of a planetary gear system according to a fifth embodiment of the present invention;
Fig. 9 shows a side view of a planetary gear system according to a sixth embodiment of the present invention;
Fig. 10 is an explanatory drawing for illustrating an angle at which a rotation axis of a planetary carrier and a rotation axis of a planetary gear unit intersect; and
Fig. 11 shows a helicopter that contains the planetary gear system according to the embodiment of the present invention.

### Best Mode for Carrying Out the Invention

A planetary gear system according to embodiments of the present invention will be described below with reference to the attached drawings.

### (First Embodiment)

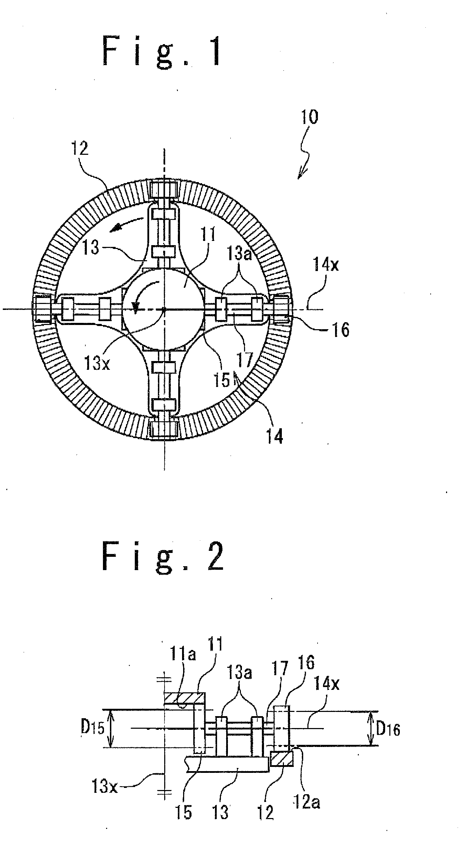

With reference to Fig. 1, a planetary gear system 10 according to a first embodiment of the present invention contains: a sun gear 11 as an input; a fixed ring gear 12; a planetary carrier 13 as an output; and a plurality of planetary gear units 14 supported by the planetary carrier 13. A rotation axis of the sun gear 11 and an axis of the ring gear 12 are arranged along the same strait line. The rotation axis of the sun gear 11 and a rotation axis 13x of the planetary carrier 13 are arranged along the same strait line. Each of the sun gear 11 and the ring gear 12 is a face gear. The ring gear 12 is larger in pitch circle diameter than the sun gear 11. The sun gear 11 is mechanically connected to an output shaft of a motor (not shown). The planetary carrier 13 is mechanically connected to a load (not shown). The planetary gear unit 14 contains a shaft 17, a planetary gear 15 coupled to the shaft 17, and a planetary gear 16 coupled to the shaft 17. The planetary gear 15 engages the sun gear 11. The planetary gear 16 engages the ring gear 12. Each of the planetary gears 15 and 16 is a cylindrical gear, such as a spur gear or helical gear, and is an external gear. The planetary carrier 13 contains bearings 13a which supports the shaft 17 such that the planetary gear unit 14 can rotate (spin) with respect to the planetary carrier 13 around a rotation axis 14x. The shaft 17 extends from the planetary gear 15 in a direction of departing from the rotation axis 13x along the rotation axis 14x and is coupled to the planetary gear 16. There is a clearance between the planetary gears 15 and 16. Since the rotation axis 14x of the planetary gear unit 14 intersects the rotation axis 13x, the planetary gear 16 is arranged more remote from the rotation axis 13x than the planetary gear 15. The rotation axis 14x and the rotation axis 13x intersect at right angle.

With reference to Fig. 2, the sun gear 11 contains a teeth-formed face 11a on which teeth engaging teeth of the planetary gear 15 are formed. The ring gear 12 contains a teeth-formed face 12a on which teeth engaging teeth of the planetary gear 16 are formed. The teeth-formed face 11a and the teeth-formed face 12a are oriented to the directions opposite to each other. There are cases in which a pitch circle diameter D₁₆ of the planetary gear 16 is smaller than, larger than, or equal to a pitch circle diameter D₁₅ of the planetary gear 15.

The sun gear 11 gives a driving force to the planetary gear 15 to cause the planetary gear unit 14 to spin. At this time, since the planetary gear 16 kicks the ring gear 12, the planetary gear 16 receives a reaction force from the ring gear 12. As a result, the planetary carrier 13 rotates in the same direction as that of the sun gear 11, and the planetary gear unit 14 rotates (revolves) together with the planetary carrier 13.

Since the planetary gears 15 and 16 are coupled by the shaft 17, they integrally rotate. Thus, a direction of torque applied to the planetary carrier 13 through the planetary gear 15 from the sun gear 11 is the same as a direction of torque applied to the planetary carrier 13 through the planetary gear 16 from the ring gear 12. Hence, a reduction gear ratio in the planetary gear system 10 is large. Here, the torque applied to the planetary carrier 13 through the planetary gear 16 from the ring gear 12 is based on the above-mentioned reaction force.

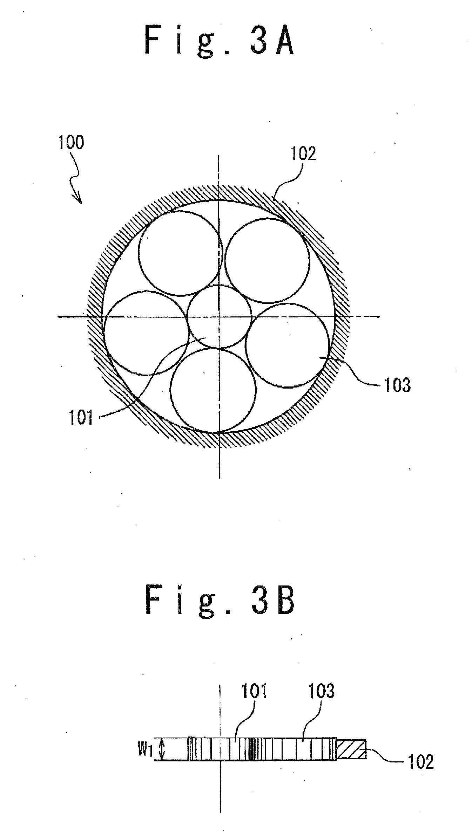

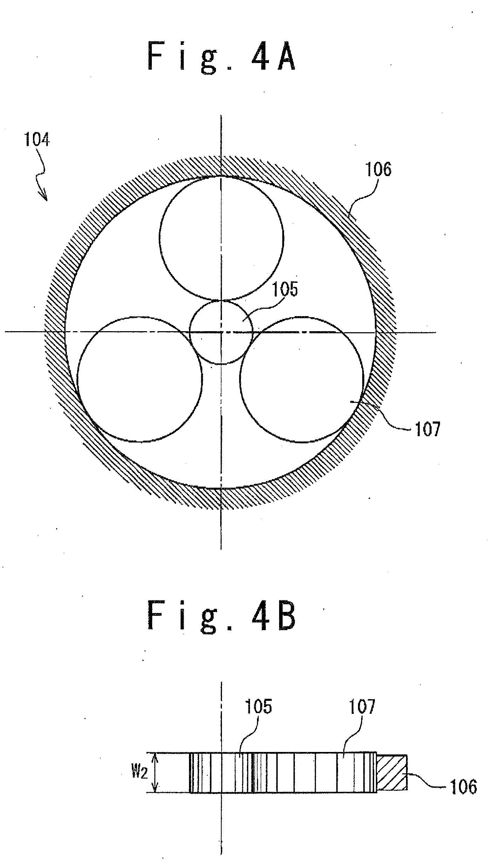

Advantages of the present embodiment will be described below with reference to Figs. 3A, 3B, 4A and 4B.

Fig. 3A shows a top view of a general planetary gear system 100. The planetary gear system 100 contains a sun gear 101, a ring gear 102, and planetary gears 103 each engaging the sun gear 101 and the ring gear 102. As shown in Fig. 3B, a common face width of the sun gear 101 and the planetary gear 103 is indicated by W₁.

Fig. 4A shows a top view of a planetary gear system 104. The planetary gear system 104 contains a sun gear 105, a ring gear 106, and planetary gears 107 each engaging the sun gear 105 and the ring gear 106. Pitch circle diameters of the sun gear 105 and the sun gear 101 are equal, and the ring gear 106 is larger in pitch circle diameter than the ring gear 102. A diameter ratio (the pitch circle diameter of the ring gear 106/the pitch circle diameter of the sun gear 105) in the planetary gear system 104 is larger than a diameter ratio (the pitch circle diameter of the ring gear 102/the pitch circle diameter of the sun gear 101) in the planetary gear system 100. Thus, the planetary gear system 104 is larger in reduction gear ratio than the planetary gear system 100.

On the other hand, since a pitch circle diameter of the planetary gear 107 is required to match with a clearance between the sun gear 105 and the ring gear 106, the planetary gear 107 is required to be large. As a result, the number of the planetary gears 107 that can be contained by the planetary gear system 104 is smaller than the number of the planetary gears 103 that can be contained by the planetary gear system 100. When the total number of the planetary gears 107 is small, a tangential force applied to one planetary gear 107 is strong. Thus, a common face width W₂ of the sun gear 105 and the planetary gear 107, which is shown in Fig. 4B, is required to be larger than the face width W₁. The larger the face width W₂ is, the heavier is the weight of the planetary gear system 104.

In the planetary gear system 10, the planetary gear 15 engaging the sun gear 11 and the planetary gear 16 engaging the ring gear 12 are different. Thus, when the diameter ratio (the pitch circle diameter of the ring gear 12/the pitch circle diameter of the sun gear 11) between the sun gear 11 and the ring gear 12 is increased in order to increase the reduction gear ratio, only required is to adjust a length of the shaft 17 and the pitch circle diameter D₁₅ and the pitch circle diameter D₁₆ are not required to match with a clearance between the sun gear 11 and the ring gear 12.

The pitch circle diameter D₁₅ and the pitch circle diameter D₁₆ can be freely selected. Thus, it is possible to easily increase the number of the planetary gear units 14 contained by the planetary gear system 10 by decreasing the pitch circle diameter D₁₅ and the pitch circle diameter D₁₆. The larger the number of the planetary gear units 14 is, the weaker is the force applied to the teeth of each of the sun gear 11, the ring gear 12, the planetary gear 15 and the planetary gear 16, and thus, it is possible to reduce the face widths of the planetary gears 15 and 16. Each of the small pitch circle diameter and the small face width means that the planetary gears 15 and 16 are light.

Furthermore, since torque is transmitted from the planetary gear 15 through the shaft 17 to the planetary gear 16 and the planetary gears 15 and 16 do not directly engage each other, the planetary gears 15 and 16 are not required to math each other in modules (e.g. tooth shape and tooth dimensions). Hence, the modules of the planetary gears 15 and 16 can be selected such that the weight of the planetary gear system 10 is saved.

Thus, according to the present embodiment, the planetary gear system 10 that can attain the large reduction gear ratio while suppressing the increase in weight is provided.

In the present embodiment, the pitch circle diameter D₁₆ of the planetary gear 16 is preferred to be smaller than the pitch circle diameter D₁₅ of the planetary gear 15. When the sun gear 11 is in a steady-state rotation, from the balance between torques applied to the planetary gear unit 14, it is apparent that a tangential force of the planetary gear 16, which is applied to the planetary gear 16 from the ring gear 12, is stronger than a tangential force of the planetary gear 15, which is applied to the planetary gear 15 from the sun gear 11. Thus, a reduction gear ratio of the planetary gear system 10 is large.

### (Second Embodiment)

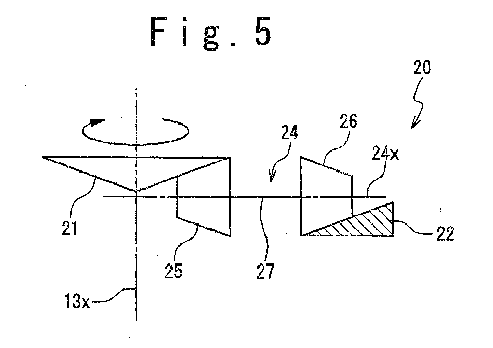

With reference to Fig. 5, a planetary gear system 20 according to a second embodiment of the present invention will be described. The planetary gear system 20 corresponds to the planetary gear system 10 in which the sun gear 11 is replaced with a sun gear 21, the planetary gear unit 14 is replaced with a planetary gear unit 24, and the ring gear 12 is replaced with a ring gear 22. The planetary gear unit 24 is supported by the planetary carrier 13 (not shown) such that the planetary gear unit 24 can rotate (spin) around a rotation axis 24x. The planetary gear unit 24 contains a shaft 27, a planetary gear 25 coupled to the shaft 27, and a planetary gear 26 coupled to the shaft 27. The planetary gear 25 engages the sun gear 21, and the planetary gear 26 engages the ring gear 22. The planetary carrier 13 supports the shaft 27. The shaft 27 extends from the planetary gear 25 in a direction of departing from the rotation axis 13x along the rotation axis 24x and is coupled to the planetary gear 26. A clearance is provided between the planetary gears 25 and 26.

Since the rotation axis 24x intersects the rotation axis 13x, the planetary gear 26 is arranged more remote from the rotation axis 13x than the planetary gear 25. The rotation axes 24x and 13x intersect at right angle. Each of the sun gear 21, the ring gear 22, the planetary gear 25 and the planetary gear 26 is a bevel gear.

There are cases in which a pitch circle diameter of the planetary gear 26 is smaller than, larger than, and equal to a pitch circle diameter of the planetary gear 25. The pitch circle diameter of the planetary gear 26 is preferred to be smaller than the pitch circle diameter of the planetary gear 25.

### (Third Embodiment)

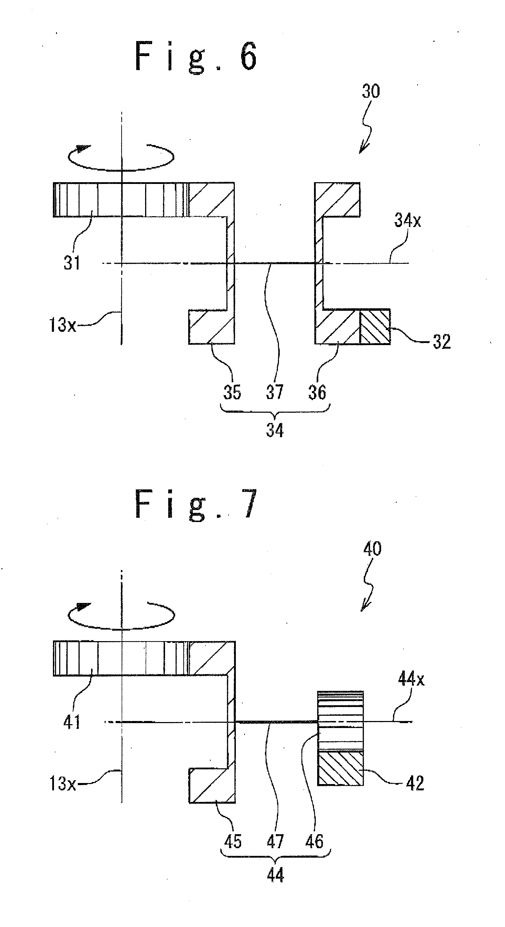

With reference to Fig. 6, a planetary gear system 30 according to a third embodiment of the present invention will be described. The planetary gear system 30 corresponds to the planetary gear system 10 in which the sun gear 11 is replaced with a sun gear 31, the planetary gear unit 14 is replaced with a planetary gear unit 34, and the ring gear 12 is replaced with a ring gear 32. The planetary gear unit 34 is supported by the planetary carrier 13 (not shown) such that the planetary gear unit 34 can rotate (spin) around a rotation axis 34x. The planetary gear unit 34 contains a shaft 37, a planetary gear 35 coupled to the shaft 37, and a planetary gear 36 coupled to the shaft 37. The planetary gear 35 engages the sun gear 31. The planetary gear 36 engages the ring gear 32. The planetary carrier 13 supports the shaft 37. The shaft 37 extends from the planetary gear 35 in a direction of departing from the rotation axis 13x along the rotation axis 34x and is coupled to the planetary gear 36. A clearance is provided between the planetary gears 35 and 36.

Since the rotation axis 34x intersects the rotation axis 13x, the planetary gear 36 is arranged more remote from the rotation axis 13x than the planetary gear 35. The rotation axes 34x and 13x intersect at right angle. The sun gear 31 is a cylindrical gear and is an external gear. The ring gear 32 is a cylindrical gear and is an internal gear. Each of the planetary gears 35 and 36 is a face gear.

There are cases in which a pitch circle diameter of the planetary gear 36 is smaller than, larger than, and equal to a pitch circle diameter of the planetary gear 35. The pitch circle diameter of the planetary gear 36 is preferred to be smaller than the pitch circle diameter of the planetary gear 35.

### (Fourth Embodiment)

With reference to Fig. 7, a planetary gear system 40 according to a fourth embodiment of the present invention will be described. The planetary gear system 40 corresponds to the planetary gear system 10 in which the sun gear 11 is replaced with a sun gear 41, the planetary gear unit 14 is replaced with a planetary gear unit 44, and the ring gear 12 is replaced with a ring gear 42. The planetary gear unit 44 is supported by the planetary carrier 13 (not shown) such that the planetary gear unit 44 can rotate (spin) around a rotation axis 44x. The planetary gear unit 44 contains a shaft 47, a planetary gear 45 coupled to the shaft 47, and a planetary gear 46 coupled to the shaft 47. The planetary gear 45 engages the sun gear 41. The planetary gear 46 engages the ring gear 42. The planetary carrier 13 supports the shaft 47. The shaft 47 extends from the planetary gear 45 in a direction of departing from the rotation axis 13x along the rotation axis 44x and is coupled to the planetary gear 46. A clearance is provided between the planetary gears 45 and 46.

Since the rotation axis 44x intersects the rotation axis 13x, the planetary gear 46 is arranged more remote from the rotation axis 13x than the planetary gear 45. The rotation axes 44x and 13x intersect at right angle. Each of the sun gear 41 and the planetary gear 46 is a cylindrical gear and is an external gear. Each of the ring gear 42 and the planetary gear 45 is a face gear.

There are cases in which a pitch circle diameter of the planetary gear 46 is smaller than, larger than, and equal to a pitch circle diameter of the planetary gear 45. The pitch circle diameter of the planetary gear 46 is preferred to be smaller than the pitch circle diameter of the planetary gear 45.

### (Fifth Embodiment)

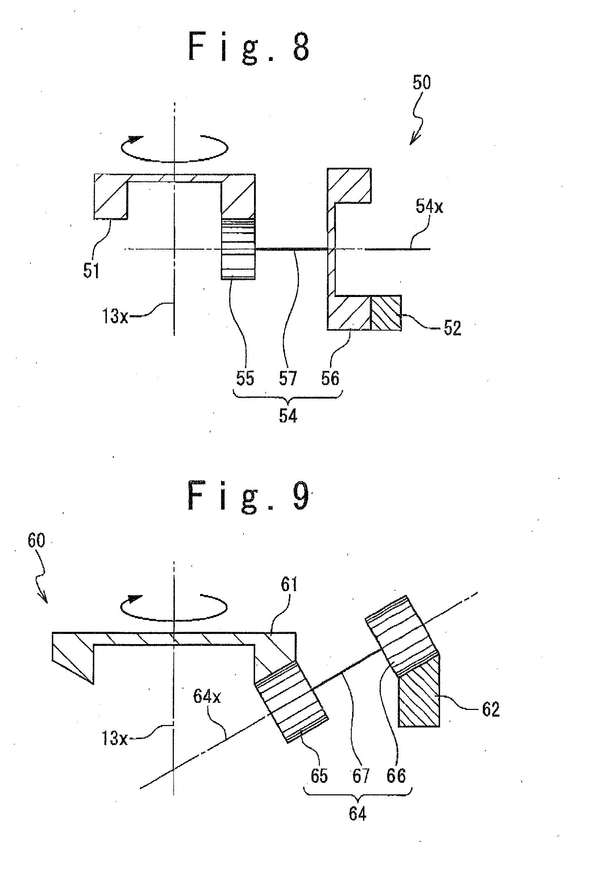

With reference to Fig. 8, a planetary gear system 50 according to a fifth embodiment of the present invention will be described. The planetary gear system 50 corresponds to the planetary gear system 10 in which the sun gear 11 is replaced with a sun gear 51, the planetary gear unit 14 is replaced with a planetary gear unit 54, and the ring gear 12 is replaced with a ring gear 52. The planetary gear unit 54 is supported by the planetary carrier 13 (not shown) such that the planetary gear unit 54 can rotate (spin) around a rotation axis 54x. The planetary gear unit 54 contains a shaft 57, a planetary gear 55 coupled to the shaft 57, and a planetary gear 56 coupled to the shaft 57. The planetary gear 55 engages the sun gear 51. The planetary gear 56 engages the ring gear 52. The planetary carrier 13 supports the shaft 57. The shaft 57 extends from the planetary gear 55 in a direction of departing from the rotation axis 13x along the rotation axis 54x and is coupled to the planetary gear 56. A clearance is provided between the planetary gears 55 and 56.

Since the rotation axis 54x intersects the rotation axis 13x, the planetary gear 56 is arranged more remote from the rotation axis 13x than the planetary gear 55. The rotation axes 54x and 13x intersect at right angle. Each of the sun gear 51 and the planetary gear 56 is a face gear. The planetary gear 55 is a cylindrical gear and is an external gear. The ring gear 52 is a cylindrical gear and is an internal gear.

There are cases in which a pitch circle diameter of the planetary gear 56 is smaller than, larger than, and equal to a pitch circle diameter of the planetary gear 55. The pitch circle diameter of the planetary gear 56 is preferred to be smaller than the pitch circle diameter of the planetary gear 55.

### (Sixth Embodiment)

With reference to Fig. 9, a planetary gear system 60 according to a sixth embodiment of the present invention will be described. The planetary gear system 60 corresponds to the planetary gear system 10 in which the sun gear 11 is replaced with a sun gear 61, the planetary gear unit 14 is replaced with a planetary gear unit 64, and the ring gear 12 is replaced with a ring gear 62. The planetary gear unit 64 is supported by the planetary carrier 13 (not shown) such that the planetary gear unit 64 can rotate (spin) around a rotation axis 64x. The planetary gear unit 64 contains a shaft 67, a planetary gear 65 coupled to the shaft 67, and a planetary gear 66 coupled to the shaft 67. The planetary gear 65 engages the sun gear 61. The planetary gear 66 engages the ring gear 62. The planetary carrier 13 supports the shaft 67. The shaft 67 extends from the planetary gear 65 in a direction of departing from the rotation axis 13x along the rotation axis 64x and is coupled to the planetary gear 66. A clearance is provided between the planetary gears 65 and 66.

Since the rotation axis 64x intersects the rotation axis 13x, the planetary gear 66 is arranged more remote from the rotation axis 13x than the planetary gear 65. The rotation axes 64x and 13x obliquely intersect. Each of the sun gear 61 and the ring gear 62 is a face gear. Each of the planetary gear 65 and the planetary gear 66 is a cylindrical gear and is an external gear.

There are cases in which a pitch circle diameter of the planetary gear 66 is smaller than, larger than, and equal to a pitch circle diameter of the planetary gear 65. The pitch circle diameter of the planetary gear 66 is preferred to be smaller than the pitch circle diameter of the planetary gear 65.

Similarly, the rotation axis 24x may obliquely intersect the rotation axis 13x in the planetary gear system 20, the rotation axis 34x may obliquely intersect the rotation axis 13x in the planetary gear system 30, the rotation axis 44x may obliquely intersect the rotation axis 13x in the planetary gear system 40, and the rotation axis 54x may obliquely intersect the rotation axis 13x in the planetary gear system 50.

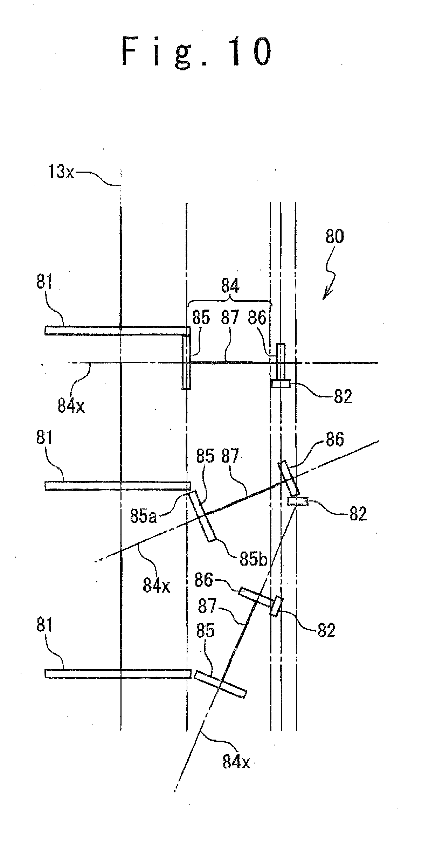

Fig. 10 is used to describe an angle at which each of the rotation axes 14x to 64x intersects the rotation axis 13x. A planetary gear system 80 is one that is arbitrarily selected from the planetary gear systems 10 to 60. The planetary gear system 80 contains a sun gear 81, a ring gear 82, and a plurality of planetary gear units 84 supported by the planetary carrier 13 (not shown). The planetary gear unit 84 contains a shaft 87, a planetary gear 85 coupled to the shaft 87, and a planetary gear 86 coupled to the shaft 87. When the planetary gear system 80 is the planetary gear system 10, the sun gear 81, the ring gear 82, the planetary gear unit 84, the planetary gear 85, the planetary gear 86 and the shaft 87 correspond to the sun gear 11, the ring gear 12, the planetary gear unit 14, the planetary gear 15, the planetary gear 16 and the shaft 17, respectively. The planetary gear 85 engages the sun gear 81, and the planetary gear 86 engages the ring gear 82. When a rotation axis 84x of the planetary gear unit 84 is inclined from a state in which the rotation axis 84x intersects the rotation axis 13x at right angle as shown in the upper potion of Fig. 10, a position at which the planetary gear 86 and the ring gear 82 are in contact is shifted toward outside as shown in the middle portion of Fig. 10, resulting in a large reduction gear ratio in the planetary gear system 80. When the rotation axis 84x is further inclined as shown in the lower portion of Fig. 10, the position at which the planetary gear 86 and the ring gear 82 are in contact is more inside as compared with a case in which the rotation axis 84x and the rotation axis 13x intersect at right angle. An angle at which the rotation axis 84x and the rotation axis 13x intersect is preferred to be designed such that the position at which the planetary gear 86 and the ring gear 82 are in contact is located at the most outside.

Moreover, by inclining the rotation axis 84x from the state of intersecting the rotation axis 13x at right angle in a direction in which an opposite side 85b of the planetary gear 85 departs from the rotation axis 13x, a large number of planetary gear units 84 are easily arranged such that they do not interfere with each other. Here, the opposite side 85b is opposite to an engaging side 85a of the planetary gear 85 with respect to the rotation axis 84x, and the engaging side 85a engages the sun gear 81.

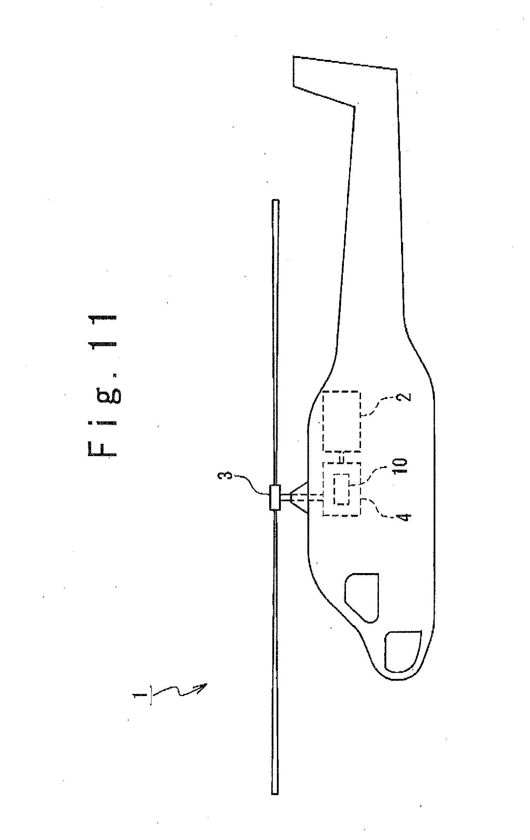

Fig. 11 shows a helicopter that contains the planetary gear system 10. The helicopter contains an engine 2 as a motor, a main rotor 3 as a load, and a transmission 4 for transmitting power (torque) from the engine 2 to the main rotor 3. The transmission 4 contains the planetary gear system 10. The planetary gear system 10 is housed in a housing (not shown) of the transmission 4. The housing of the transmission 4 supports the sun gear 11 and the planetary carrier 13 such that they can rotate. The ring gear 12 is fixed to the housing of the transmission 4. The sun gear 11 is mechanically connected to an output shaft of the engine 2. The planetary career is mechanically connected to the main rotor 3. Power (torque) is transmitted from the engine 2 to the ring gear 12, and power (torque) is outputted from the planetary carrier 13 to the main rotor 3.

The helicopter may contain any of the above-mentioned planetary gear systems 20, 30, 40, 50, and 60, instead of the planetary gear system 10.

Since the planetary gear systems 20, 30, 40, 50 and 60 are light in weight and large in reduction gear ratio, they are especially preferable for the transporting means such as helicopter. The configurations of the planetary gear systems 20, 30, 40, 50 and 60 can be modified.

As common advantages of the planetary gear systems according to the above-mentioned embodiments, the following points are provided. Since a role to engage the sun gear and a role to engage the ring gear are shared between the different planetary gears, the pitch circle diameter of the planetary gear can be made smaller, and thus, the planetary gear system can contain the large number of gear units. Hence, it is possible to attain a large reduction gear ratio while suppressing the increase in weight of the planetary gear system. Moreover, since torque is transmitted from the planetary gear engaging the sun gear through the shaft to the planetary gear engaging the ring gear, the planetary gear engaging the sun gear and the planetary gear engaging the ring gear are not required to match with each other in modules. This point also contributes to the suppression of increase in weight.

As mentioned above, the present invention has been described by referring to the embodiments. However, the present invention is not limited to the above-mentioned embodiments. Various modifications can be applied to the above-mentioned embodiments.

This application is based upon and claims the benefit of priority from Japanese Patent Application NO. 2008-37848, filed on February 19, 2008, the disclosure of which is incorporated herein its entirely by reference.

## Claims

1. A planetary gear system comprising:
a sun gear as an input;
a fixed ring gear;
a planetary career as an output; and
a planetary gear unit supported by said planetary career,
wherein said planetary gear unit includes:
a shaft;
a first planetary gear coupled to said shaft and engaging said sun gear; and
a second planetary gear coupled to said shaft and engaging said ring gear,
said planetary gear unit rotates around a first rotation axis with respect to said planetary career,
said planetary career rotates around a second rotation axis, and
said first rotation axis intersects said second rotation axis.

2. The planetary gear system according to claim 1, wherein a pitch circle diameter of said second planetary gear is smaller than a pitch circle diameter of said first planetary gear.

3. The planetary gear system according to claim 2, wherein said shaft extends from said first planetary gear in a first direction to be coupled to said second gear, and
said first direction is a direction of departing from said second rotation axis.

4. The planetary gear system according to claim 3, wherein said first rotation axis is inclined from a state of intersecting said second rotation axis at right angle in a direction in which an opposite side of said first planetary gear departs from said second rotation axis,
said opposite side is opposite to an engaging side of said first planetary gear with respect to said first rotation axis, and
said engaging side engages said sun gear.

5. The planetary gear system according to claim 1, wherein said shaft extends from said first planetary gear in a first direction to be coupled to said second gear, and
said first direction is a direction of departing from said second rotation axis.

6. The planetary gear system according to claim 1, wherein said first rotation axis is inclined from a state of intersecting said second rotation axis at right angle in a direction in which an opposite side of said first planetary gear departs from said second rotation axis, said opposite side is opposite to an engaging side of said first planetary gear with respect to said first rotation axis, and
said engaging side engages said sun gear.

7. The planetary gear system according to any of claims 1 to 6, wherein said sun gear and said ring gear are face gears.

8. The planetary gear system according to any of claims 1 to 7, wherein torque is transmitted to said sun gear from an engine of a helicopter, and
torque is outputted from said planetary career to a main rotor of said helicopter.
